# EUROPEAN PATENT APPLICATION

(11) **EP 2 581 964 A1**
(43) Date of publication of application: **17.04.2013**
(21) Application number: 12188254.2
(22) Date of filing: 11.10.2012
(51) Int. Cl.: H01M 2/10, H01M 2/20, H01M 10/42

(54) **Battery pack**

(30) Priority: 14.10.2011 JP 2011227279
(71) Applicant: SANYO ELECTRIC CO. LTD, Moriguchi-City, Osaka 570 (JP)
(72) Inventor: Yoneda, Haruhiko, Moriguchi City, Osaka 570-8677 (JP); Haino, Masami, Moriguchi City, Osaka 570-8677 (JP)
(74) Representative: Hertz, Oliver

(57) **Abstract**

The problem is to be able to maintain an electrical connection even when solder is lost. In the battery pack, the printed circuit board 12 has a PCB hole 13 to solder a lead plate 11, and the circumferential edge of the PCB hole 13 has a conductive pattern 15 formed to connect conductively to the lead plate 11. The battery holder 23 has a positioning mechanism holding a lead plate 11 in a position corresponding to the PCB hole 13, and a fixing mechanism arranging the printed circuit board 12 on the lead plate 11 positioned on the battery holder 23 by the positioning mechanism in a state making contact with the conductive pattern 15, and fixing the lead plate 11 to the battery holder 23 in this state. The printed circuit board 12 is fixed to the battery holder 23 by the fixing mechanism in a state having pressure applied to the printed circuit board 12 by the lead plate 11, and the lead plate 11 is soldered to the printed circuit board 12 via the PCB hole 13 in this state.

## Description

### FIELD OF THE INVENTION

The present invention relates to a battery pack suitable for high-current discharge, primarily in an electric bike.

### BACKGROUND OF THE INVENTION

A battery pack has a plurality of battery cells connected in parallel or in series, and the output voltage is adjusted. A printed circuit board is connected to such a battery pack on which a protective circuit is mounted to detect the cell voltage of each battery cell and detect abnormal cell voltage.

In such a battery pack, the electrical connections have to remain stable over a long period of time. Solder is most often used to establish electrical connections between a lead plate and a printed circuit board, but solder changes over time and may crack due to stress from external forces and impacts. Therefore, a mechanical soldering structure has been proposed in Japanese Laid-Open Patent Publication No. 63-24693 to maintain an electrical connection between a lead plate and a printed circuit board even when solder is lost. For example, a hole is formed on a printed circuit board, a lead plate is passed through the hole, the lead plate is bent at the tip, and the lead plate and printed circuit board are soldered and connected. This structure can be expected to maintain a connection between the bent tip of the lead plate and the printed circuit board even if solder is lost.

However, this method requires enough space for the lead plate to protrude from the hole in the printed circuit board, requires a bending step to bend the lead plate, and requires enough space for the bent plate.

### SUMMARY OF THE INVENTION

The present invention has been devised in light of the problems associated with the prior art. The main purpose of the present invention is to provide a battery pack able to maintain an electrical connection even when solder is lost.

In order to achieve this purpose, the first aspect of the present invention is a battery pack including at least one battery cell 10 provided with an electrode on an end surface, at least one lead plate 11 connected to an end surface electrode of a battery cell 10, a printed circuit board 12 connected to a lead plate 11 by soldering, and a battery holder 23 for holding a lead plate 11 and a battery cell 10, in which the battery pack is characterized by the printed circuit board 12 having a PCB hole 13 formed in a position to solder the lead plate 11, the circumferential edge of the PCB hole 13 having a conductive pattern 15 formed to render conductive the lead plate 11, and the battery holder 23 having a positioning mechanism holding a lead plate 11 in a position corresponding to the PCB hole 13, and a fixing mechanism arranging the printed circuit board 12 on the lead plate 11 positioned on the battery holder 23 by the positioning mechanism in a state making contact with the conductive pattern 15, and fixing the lead plate 11 to the battery holder 23 in this state, and in which the printed circuit board 12 is fixed to the battery holder 23 by the fixing mechanism in a state having pressure applied to the printed circuit board 12 by the lead plate 11, and the lead plate 11 is soldered to the printed circuit board 12 via the PCB hole 13 in this state. Because the relative movement of the lead plate relative to the printed circuit board is restricted by the positioning mechanism in the horizontal direction and by the fixing mechanism in the vertical direction, relatively movement of the lead plate relative to the printed circuit board is restricted, conductivity is maintained, and a highly reliable electrical connection is achieved even if solder is lost. Unlike the prior art, a mechanical/soldering connection can be established without requiring a bending operation after the end of a lead plate has been manually inserted into a slit in the printed circuit board. As a result, there is no protruding portion, and wasted space can be eliminated.

In a battery pack according to a second aspect of the present invention, the lead plate 11 has a bent lead end surface 11A to solder the printed circuit board 12, and the area of the opening in the PCB hole 13 is substantially equal to or smaller than the area of the lead end surface 11A. In this way, the end surface of the bent lead can be reliably exposed in the PCB hole, and can be readily soldered. Because the printed circuit board is simply aligned with the lead end surface, soldering can be performed without any additional processing such as bending the lead plate.

In a battery pack according to a third aspect of the present invention, as the positioning mechanism, a lead hole 11B is formed in the lead end surface 11A to position the battery holder 23, and a protrusion 23B is provided in the battery holder 23 in the position corresponding to the lead hole 11B, so the lead end surface 11A can be positioned by inserting the protrusion 23B into the lead hole 11B. In this way, misalignment in the horizontal direction can be restricted by inserting a protrusion on the battery holder into a lead hole in the lead end surface.

In a battery pack according to a fourth aspect of the present invention, as the positioning mechanism, a fixing rib holding the periphery of the lead end surface 11A is provided in the battery holder 23. In this way, misalignment in the horizontal direction can be restricted by the fixing rib of the battery holder.

In a battery pack according to a fifth aspect of the present invention, the battery holder 23 has at least one cell-housing space housing a battery cell 10, and the lead plate 11 is fixed to the end surface of the battery holder 23 and the end surface electrode of each cell 10 is connected to the lead plate 11 in a state in which the cell-housing space passes through the battery holder 23 and a battery cell 10 is housed in the cell-housing space. In this way, a lead plate and a battery cell can be fixed to the end surface of the battery holder using, for example, welding, and the fixing operation can be performed efficiently.

In a battery pack according to a sixth aspect of the present invention, a plurality of battery holders 23 are connectably configured, and the plurality of battery holders 23 are connected to form a single connected holder 20. By connecting any number of battery holders in this way, the number of battery cells housed in the battery holders can be adjusted to match the desired output value.

In a battery pack according to a seventh aspect of the present invention, a surface of connected battery holders 23 is an end surface having a fixed lead plate 11, another surface of the connected holder 20 has a mounting surface 23A with a flat surface on which the printed circuit board 12 can be mounted, and the lead end surface 11A is interposed between the printed circuit board 12 and the connected holder 20 in a state having the printed circuit board 12 mounted on the mounting surface 23A with the lead end surface 11A protruding from the connected surfaces of the battery holders 23 on the mounting surface 23A. By bringing the lead plate and the printed circuit board close to each other in this way, a connection can be established without using a member such as a lead wire, and the electrical connection can be simplified.

In a battery pack according to an eighth aspect of the present invention, the battery holder 23 is configured so a secondary cell-housing space is provided on both sides of the mounting surface 23A, and the printed circuit board 12 is arranged between secondary cell-housing spaces. In this way, both sides of the printed circuit board are protected by the cell-housing space, that is, the battery holder, and the electronic circuits mounted on the printed circuit board can be protected. Also, the number of cell-housing spaces can be increased to house more secondary battery cells, and the dead space in the battery holder can be used as arrangement space for the printed circuit board, thereby making more effective use of limited space.

In a battery pack according to a ninth aspect of the present invention, as the fixing mechanism, a plurality of fixing holes 14 is formed in the printed circuit board 12 to position the printed circuit board relative to a battery holder 23, and at least one cylindrical protrusion 23D is provided in each battery holder 23 in a position corresponding to a fixing hole 14; at least one fixing hole 14 is a long hole extending in the connecting direction of the battery holders 23; and a cylindrical protrusion 23D is inserted into the fixing hole 14 to be able to adjust the position and fix the printed circuit board 12 to connected battery holders 23, and to adjust the position in the connecting direction of the battery holders 23 so the lead end plate 11A is exposed via the PCB hole 13. In this way, any dimensional error due to the connection of battery holders can be corrected by the long fixing hole, the lead end surface can be reliably interposed between the battery holders and the printed circuit board at the position of the PCB hole, and an electrical connection can be maintained.

In a battery pack according to a tenth aspect of the present invention, the PCB hole 13 is a long hole extending in the connecting direction of the battery holders 23. In this way, a lead end plate can be reliably soldered via a long PCB hole, even when there is some misalignment between the PCB hole and the lead end plate.

In a battery pack according to an eleventh aspect of the present invention, a connector 16 is formed in the printed circuit board 12 for an electronic circuit separated from the conductive pattern 15 formed on the peripheral edge of the PCB hole 13, and an electronic circuit mounted on the printed circuit board 12 is connectable by soldering the conductive pattern 15 and the connector 16. In this way, an electronic circuit mounted on the printed circuit board can be connected electrically to a battery cell first by soldering the conductive pattern and the connector. As a result, battery cells and electronic circuits can be connected electrically in ascending order beginning with the lowest voltage, thereby reducing the load on the electronic circuits during mounting.

### BRIEF DESCRIPTION OF THE DRAWINGS

Fig. 1 is a perspective view showing the external appearance of the battery pack in an embodiment of the present invention with the outer case removed.
Fig. 2 is a plan view of the battery pack in Fig. 1 from above the printed circuit board.
Fig. 3 is an exploded perspective view showing the battery pack in Fig. 1.
Fig. 4 is an enlarged perspective view of the PCB hole section of the printed circuit board installed in the battery holder in Fig. 1.
Fig. 5 (a) is an enlarged schematic cross-sectional view showing the PCB hole section from V-V in Fig. 4, and Fig. 5(b) is an enlarged schematic cross-sectional view showing the PCB hole section from V-V in Fig. 4 in a different example.
Fig. 6 is an enlarged perspective view of the battery holder in Fig. 4 with the printed circuit board removed.
Fig. 7 is a cross-sectional view and partial enlarged cross-sectional view from VII-VII in Fig. 2.
Fig. 8 is an enlarged perspective view showing a variation on the positioning mechanism shown in Fig. 6.

### DETAILED DESCRIPTION OF THE INVENTION

The following is an explanation of embodiments of the present invention with reference to the drawings. The embodiments described below illustrate battery packs which embody the technical concepts of the present invention, and the battery pack of the present invention is not specific to the following. In the following specification, reference numbers corresponding to members described in the embodiments have been affixed to the members in the Claims section and Means of Solving the Problem section in order to facilitate understanding of the scope of the claims. However, the members described in the claims are not at all specific to the members in the embodiments. The dimensions, materials, shapes, and relative arrangement of the configurational members described in the embodiments are merely explanatory examples and are not intended to limit the scope of the invention unless otherwise noted. The size and relative position of the members illustrated in the drawings may have been exaggerated to clarify the description. In the following explanation, identical or similar members have been denoted using the same names and reference signs, and a detailed description has been omitted where appropriate. Among the elements constituting the present invention, a plurality of elements may be combined into a single element, or a single element may be divided into a plurality of elements. Conversely, the function of a single member may be divided among a plurality of members and realized. Also, details described in some of the examples and embodiments can be applied to other examples and embodiments.

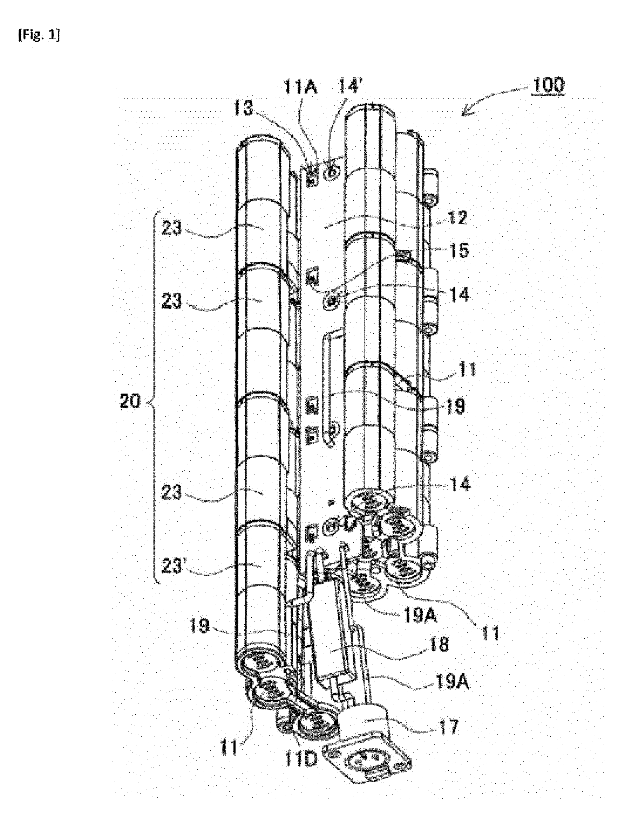

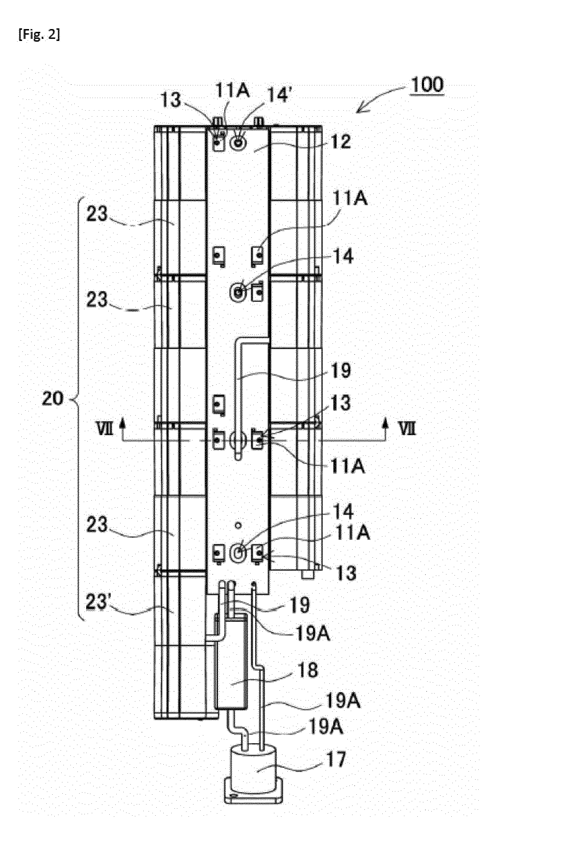

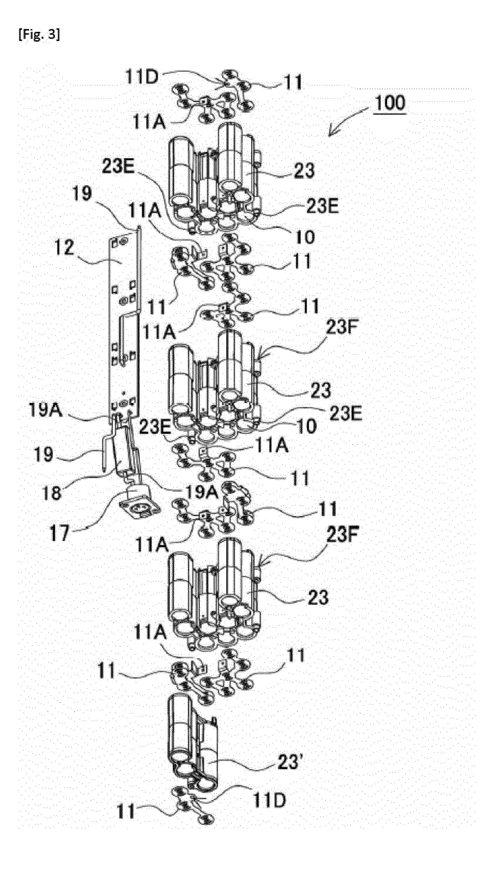

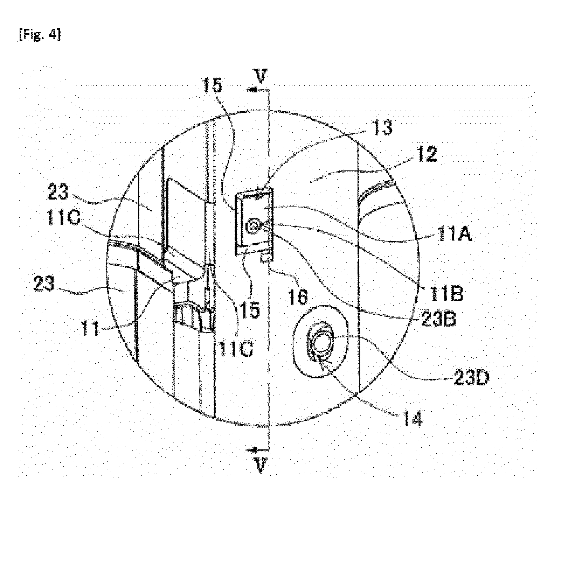

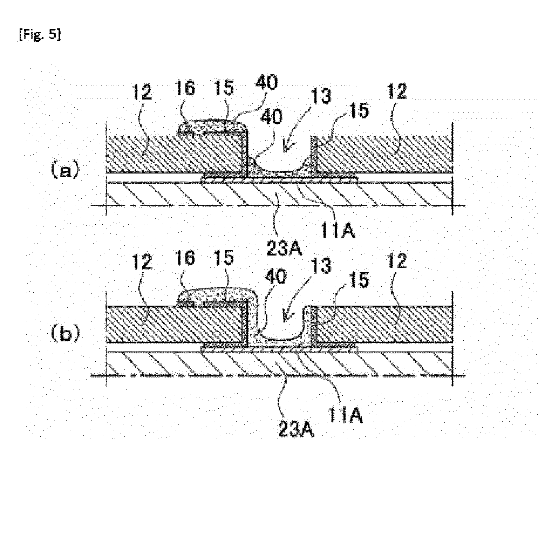

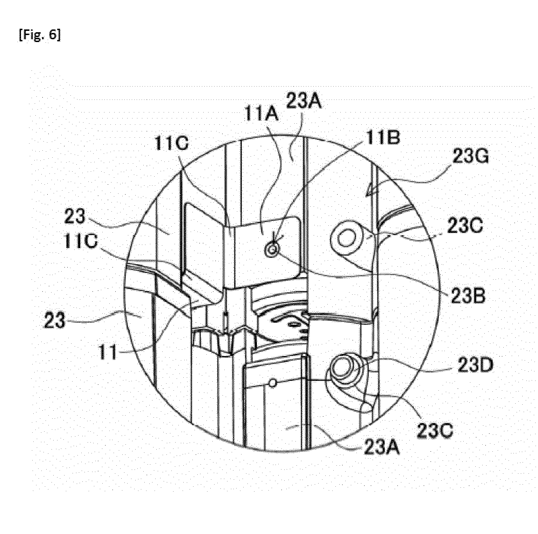

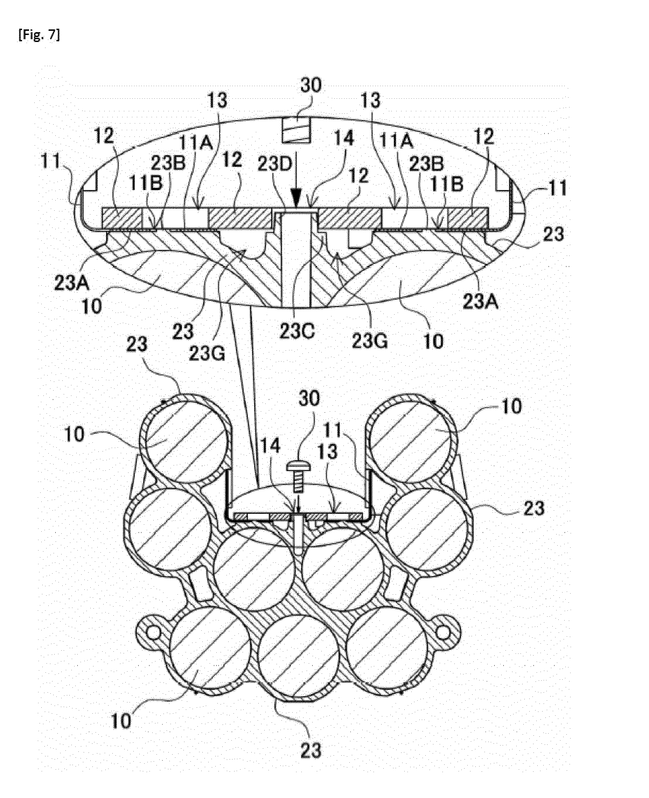

(Examples) The following is an explanation of a battery pack according to an embodiment of the present invention with reference to Fig. 1 through Fig. 7. Here, Fig. 1 is a perspective view showing the external appearance of the battery pack 100 in the embodiment of the present invention with the outer case removed, Fig. 2 is a plan view of the battery pack 100 in Fig. 1 from above the printed circuit board 12, and Fig. 3 is an exploded perspective view showing the battery pack 100 in Fig. 1. Also, Fig. 4 is an enlarged perspective view of the PCB hole 13 section of the printed circuit board 12 installed in the battery holder 23 in Fig. 1, Fig. 5 (a) is an enlarged schematic cross-sectional view showing the PCB hole section from V-V in Fig. 4, Fig. 5 (b) is an enlarged schematic cross-sectional view showing the PCB hole section from V-V in Fig. 4 in a different example, Fig. 6 is an enlarged perspective view of the battery holder 23 in Fig. 4 with the printed circuit board 12 removed, and Fig. 7 is a cross-sectional view and partial enlarged cross-sectional view from VII-VII in Fig. 2.

First, the battery pack 100 shown in the perspective view of Fig. 1 and the plan view of Fig. 2 is a connected holder 20 formed by connecting battery holders 23 at three stages, and then connecting a secondary battery holder 23'. As shown in the exploded perspective view of Fig. 3, a lead plate 11 is interposed between the connecting surfaces of the battery holders 23 and the secondary battery holder 23'. A lead plate 11 is also arranged on both end surfaces of the connected holder 20. The battery holders 23 have a fixing mechanism by which a printed circuit board 12 connected electrically to each lead plate 11 is fixed. The printed circuit board 12 is fixed by screws or rivets (not shown) to the battery holders 23 via a first fixing hole 14' and other fixing holes 14.

The lead end surfaces 11A, which are bent surfaces on the lead plate 11 are interposed between the printed circuit board 12 and the battery holders 23, so as to be exposed via PCB holes 13 in the printed circuit board 12. These PCB holes 13 are long holes in the connecting direction of the battery holders 23 and are used to adjust the lead end surfaces 11A in an exposed position. As shown in the exploded perspective view of Fig. 4, a conductive pattern 15 is formed on the peripheral edges of the PCB holes 13. While not shown in the drawing, the lead end surfaces 11A and the conductive patterns 15 are connected electrically via the PCB holes 13 using soldering. In this configuration, the lead end surfaces 11A are interposed and fixed between the printed circuit board 12 and the battery holders 23 even if the soldering comes off. As a result, the electrical connection can be maintained, and the configuration can realize a mechanical soldering function. Here, mechanical soldering indicates a structure which prevents relative movement between the printed circuit board 12 and the lead end surface 11A and maintains an electrical connection even if soldering comes off. Because, unlike the prior art, this configuration does not require the manual insertion of the ends of a lead plate into slits formed in a printed circuit board and the bending of these ends after insertion, the working process can be simplified and the amount of time required by the soldering operation can be reduced.

As shown in Fig. 2, PCB holes 13 are formed in nine places. The lead end surfaces 11A are arranged using a positioning mechanism so that they can be exposed at positions prescribed by the PCB holes 13. In this way, the lead end surfaces 11A can be soldered to the conductive patterns 15 in the printed circuit board 12 from above the printed circuit board 12 via the PCB holes 13. This can improve work efficiency. In the plan view of Fig. 2, there are nine PCB holes 13 in the printed circuit board 2. However, the present invention is not limited to this example. The number can be adjusted depending on the number of battery holders 23 to be connected and the reliability of the electrical connections being sought.

There are also four holes in the printed circuit board 12 for fixing battery holders 23. The holes used to fix the printed circuit board 12 begin with the first fixing hole 14' at the top of the drawing, followed by three long fixing holes 14 in the connecting direction of the battery holders 23, which enable the mounting position to be adjusted. In this way, the printed circuit board 12 can absorb misalignment errors in the connecting direction of the battery holders 23, and can be reliably fixed to the battery holders 23. The number of fixing holes 14 in the printed circuit board 12 can be changed depending on the number of battery holder 23 connections.

In the battery pack 100 shown in the exploded perspective view of Fig. 3, three battery holders 23 and one secondary battery holder 23' are connected. Each battery holder 23 houses nine battery cells 10. The secondary battery holder 23' at one end houses three battery cells 10. A plurality of lead plates 11 with different shapes are interposed between each battery holder 23 and the secondary battery holder 23' housing the plurality of battery cells 10. In this embodiment, the three battery holders 23 and the one secondary battery holder 23' house a total of thirty battery cells 10. In this battery pack 100, each lead plate 11 connects ten battery cells 10 in series, and three battery cells 10 in parallel. However, the present invention is not limited to this embodiment. The number of battery cells housed in each battery holder and the number of battery holder connection levels can be changed depending on the power demand specifications of the battery-operated device. Also, there is no need to house battery cells in all of the cell-housing spaces of a battery holder. Some of the cell-housing spaces can be left empty. In this way, the power output specifications can be adjusted based on the number of battery cells while using the same type of battery holder. As a result, special battery holders do not have to be designed based on the number of battery cells to be used, and battery packs with different power output specifications can be configured using the same type of battery holder.

Also, as shown in the perspective view of Fig. 1, a connection hole 11D is formed in the lead plate 11 arranged at both ends of the connected holders 20, and a lead wire 19 is connected. As shown in the exploded perspective view of Fig. 3, this lead wire 19 is drawn from the printed circuit board 12 and connected to the connection hole 11D in the two lead plates 11 shown at the top and bottom of the drawing along with two other wires. Also, two input/output lead wires 19A are connected to the printed circuit board 12 as input/output power lines to an external unit, and a power output connector 17 is connected to one of them via a fuse box 18. In this way, the battery pack 100 can supply electric power to an external unit and receive power from an external unit via a connector 17.

At the same time, as shown in the exploded perspective view of Fig. 3, a plurality of connecting protrusions 23E and connecting recesses 23F are provided in the connecting surfaces of the battery holders 23. When battery holders 23 are connected to each other, the connecting protrusions 23E and connecting recesses 23F are fitted together to prevent misalignment in the direction orthogonal to the connecting direction, and fit the battery holders together properly. In this way, misalignment by the battery holders 23 can be eliminated, and the end surface electrodes of the housed battery cells 10 and the lead plates 11 can be joined together securely. The connection structure of the battery holders is not limited to a fitting structure with connecting protrusions and connecting recesses. Another method, such as using screws, can be employed.

(Battery Cell 10) In this embodiment, the battery cells 10 are cylindrical lithium ion (Li-ion) secondary batteries. However, the battery cells 10 do not have to be lithium ion secondary batteries. For example, the battery cells can all be chargeable batteries such as nickel-metal hydride (Ni-MH) batteries or nickel-cadmium (NiCd) batteries. In this embodiment, cylindrical batteries are used, in which the outer canisters of the battery cells are cylindrical. However, rectangular batteries can also be used.

(Printed Circuit Board 12) Fig. 4 is an enlarged perspective view from above in Fig. 1 of a PCB hole 13 section in a connection between a first battery holder 23 and a second battery holder 23. A PCB hole 13 and a fixing hole 14 are formed in the printed circuit board 12. Also, a bent lead end surface 11A is arranged immediately below the PCB hole 13. The area of the opening in the PCB hole 13 is substantially equal to or smaller than the area of the lead end surface 11A.

(Fixing Hole 14) First, a cylindrical protrusion 23D provided on the battery holder 23 is inserted into the fixing hole 14 in the printed circuit board 12. The fixing hole 14 is a long hole in the connecting direction of the battery holders 23. This long hole is used to adjust the position of the printed circuit board 12 relative to the cylindrical protrusion 23D, which is then fixed to the battery holders 23 using screws or rivets (not shown).

(PCB Hole 13) Also, a connector 16 is formed in the printed circuit board 12 near and electrically insulated relative to the conductive pattern 15 formed in the PCB hole 13. This connector 16 is connected electrically to an electronic component mounted on both surfaces of the printed circuit board 12. When the lead plates and printed circuit board are connected in this way during assembly, inadvertent conduction with an electronic circuit mounted on the printed circuit board is prevented, and the electronic circuit can be protected.

When the lead plates and printed circuit board come into contact in a battery pack of the prior art, there is conduction to an electronic circuit on the printed circuit board. As a result, unintended high voltage and transient current in the electronic circuit may cause damage to electronic components. In contrast, by installing the lead end plates 11A and the printed circuit board 12 as shown in the embodiment, no electricity is conducted to an electronic circuit arranged on the printed circuit board 12. This is because the electronic circuits are disconnected by the space between the connector 16 and the conductive pattern 15. Because no transient current reaches an electronic circuit mounted on the printed circuit board 12, overcurrent is prevented from occurring in the internal electronic components. Conduction of electricity to the electronic circuit begins when the conductive pattern 15 and connector 16 are soldered. By soldering the conductive patterns 15 and connectors 16 in ascending order beginning with the connected battery cell 10 having the lowest voltage, the electronic circuits mounted on the printed circuit board 12 can be protected.

The PCB hole 13 shown in the enlarged schematic cross-sectional views in Fig. 5 (a) and Fig. 5 (b) is a solder mounting spot formed in the printed circuit board 12. The printed circuit board 12 is mounted on the mounting surfaces 23A of the battery holders 23 which are described below. A conductive pattern 15 is formed on the printed circuit board 12 on the peripheral edge of the PCB hole 13, and a connector 16 is formed which is connected to an electronic circuit. A lead end surface 11A is interposed between the printed circuit board 12 and the mounting surface 23A. The lead end surface 11A shown in the drawing is connected electrically to the conductive pattern 15 in the printed circuit board 12 using solder 40. The conductive pattern 15 is also connected electrically to the connector 16 using solder 40. In this way, the lead end surface 11A can conduct electricity with the connector 16 via the conductive pattern 15. In this way, an electronic circuit connected to the connector 16 can be electrified. In this way, the electronic circuit can perform a predetermined operation such as monitoring the voltage, current and temperature of a battery cell 10.

As shown in the enlarged schematic cross-sectional views in Fig. 5(a) and Fig. 5(b) , soldering to the printed circuit board 12 can be performed by connecting the lead end surface 11A and the conductive pattern 15, and by connecting the conductive pattern 15 and the connector 16 using solder 40. In the example shown in Fig. 5 (a), the connector 16 is soldered after the lead end surface 11A and the conductive pattern 15 have been soldered. By soldering the conductive pattern 15 to the connector 16 separately from soldering the lead end surface 11A to the conductive pattern 15, soldering of the lead end surface 11A and the conductive pattern 15 can be performed in the desired order. At the same time, soldering the conductive pattern 15 to the connector 16 in ascending order from the battery cell with the lowest voltage, overloading of the electronic circuits mounted on the printed circuit board can be avoided.

The present invention is not limited to a method in which the soldering is separated. As shown in Fig. 5 (b), the soldering of the lead end surface 11A, the conductive pattern 15 and the connector 16 can be performed all at once. Because the soldering is performed simultaneously at three points, the assembly process can be shortened.

(Positioning Mechanism) As shown in the enlarged perspective view of Fig. 6, a mounting surface 23A is provided on the upper surface of a battery holder 23. This is a flat surface on which a lead end surface 11A can be mounted. A protrusion 23B is provided on the mounting surface 23A for positioning the lead end surface 11A. The height of the protrusion 23B is equal to or slightly less than the thickness of the lead end surface 11A. A lead hole 11B for positioning is formed in the lead end surface 11A opposite this. In this way, a positioning mechanism can be realized in which a protrusion 23B on a battery holder 23 is inserted into a lead hole 11B to restrict the relative movement of a lead end surface 11A and the battery holder 23 in the horizontal direction, and to avoid misalignment.

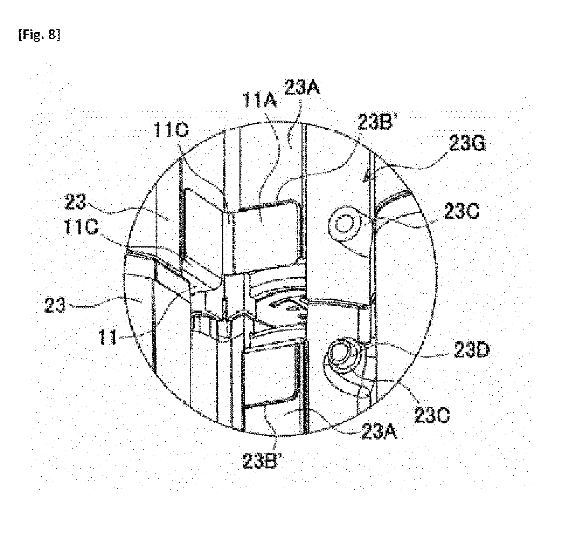

The positioning mechanism is not limited to this configuration. Any configuration that can avoid misalignment of a lead end surface 11A and a battery holder 23 can be used. In the variation shown in Fig. 8, for example, a fixing rib 23B' can be provided in the mounting surface 23A of a battery holder 23 to avoid misalignment in the horizontal direction relative to the lead end surface 11A. This fixing rib 23B' is a peripheral wall provided on the mounting surface 23A to surround the lead end surface 11A. The height of the peripheral wall is equal to or less than the thickness of the lead end surface 11A.

In the same drawing, another positioning mechanism is provided in which a recess is formed in the mounting surface 23A, a protrusion is provided on the lead end surface 11A, and the protrusion can be inserted into the recess to avoid misalignment in the horizontal direction relative to the lead end surface 11A.

Here, bending lines 11C are formed in the lead end surface 11A so a printed circuit board 12 orthogonal to the lead plate 11 arranged between connected battery holders 23 is joined parallel to the lead end surface. In other location, the lead plate 11 can have a place in which a lead end surface 11A with a single bending line 11C is provided. These lead end surfaces 11A are arranged parallel to the mounting surface 23A of the battery holders 23, and the printed circuit board 12 is placed on top and secured. Because the lead end surfaces 11A are interposed between the printed circuit board 12 and the battery holders 23 as a fixing mechanism, movement in the vertical direction relative to the lead end surfaces 11A can be avoided. Here, the connection between the printed circuit boards 12 and the lead end surfaces 11A can function as mechanical soldering, and the durability can be improved with respect to vibrations and the like.

(Mounting Surface 23A) Here, a lead end surface 11A can be held on the flat surface of the mounting surface 23A, and the printed circuit board 12 can be arranged parallel to this on top and fixed. In this way, a lead end surface 11A can be reliably secured between a printed circuit board 12 and the mounting surface 23A.

In this embodiment, the flat surface of the mounting surface 23A is formed in the insertion direction above the battery cells 10 housed in the battery holder 23 as shown in the cross-sectional view in Fig. 7. There is a separate one for each battery cell 10. An arrangement space 23G is formed between separate mounting surfaces 23A which is able to house an electronic circuit mounted on and protruding from the underside of the printed circuit board 12. In this way, electronic circuits mounted on the underside of the printed circuit board 12 can be arranged in arrangement spaces 23G, electronic circuits can be mounted on both sides of the printed circuit board 12, and electronic components can be arranged with a greater degree of freedom.

In the battery holder 23 shown in the enlarged perspective view of Fig. 6, there are two mounting portions 23C on both ends of the arrangement space 23G, and these mounting portions 23C are installation holes for mounting and fixing the printed circuit board 12. The mounting portions 23C are arranged at a height that is flush with the mounting surface 23A. One of the mounting portions 23C has a cylindrical protrusion 23D which can be inserted into a fixing hole 14 in the printed circuit board 12. In this way, the position for properly arranging the printed circuit board 12 on the battery holder 23 can be determined.

A secondary battery housing space is provided on both ends of the battery holder 23 shown in the cross-sectional view and enlarged cross-sectional view in Fig. 7. This space can accommodate battery cells 10 on both sides. The printed circuit board 12 is arranged between these secondary battery housing spaces. A lead end surface 11A is interposed between this printed circuit board 12 and the mounting surfaces 23A of the battery holder 23. In this way, both ends of the printed circuit board 12 are surrounded by the secondary battery housing spaces, and the electronic circuits mounted on top of the printed circuit board 12 can be protected.

As mentioned above, PCB holes 13 are formed in the printed circuit board 12, and lead end surfaces 11A are arranged directly beneath these holes. A lead hole 11B is formed in a lead end surface 11A, and arranged so as to be inserted over a protrusion 23B provided on the mounting surface 23A. By inserting protrusions 23B into lead holes 11B in the lead end surfaces 11A, misalignment can be avoided in the horizontal direction.

Also, fixing holes 14 are formed in the printed circuit board 12, and cylindrical protrusions 23D in the mounting portions 23C provided on the battery holders 23 are inserted into the fixing holes 14. The printed circuit board 12 in the drawing is secured to the mounting surface 23A on the battery holders 23 by inserting screws 30 into the fixing holes 14. In this way, the lead end surfaces 11A can be interposed between the mounting surfaces 23A and the printed circuit board 12 and reliably secured.

The battery holders 23 with cell-housing spaces have an external shape that conforms to the shape of the housed battery cells 20. In this way, the weight of the battery holders 23 can be reduced while also retaining enough strength to hold the housed battery cells 20.

A battery pack according to the present invention can be suitably used as a power unit for a power-assisted bicycles and other types of electric bicycles, electric motorcycles, and power tools.

### Key to the Drawings

- 100:: Battery Pack
- 10:: Battery Cell
- 11:: Lead Plate
- 11A:: Lead End Surface
- 11B:: Lead Hole
- 11C:: Bending Line
- 11D:: Connection Hole
- 12:: Printed Circuit Board
- 13:: PCB Hole
- 14:: Fixing Hole
- 14':: First Fixing Hole
- 15:: Conductive Pattern
- 16:: Connector
- 17:: Connector
- 18:: Fuse Box
- 19:: Lead Wire
- 19A:: Input/Output Lead Wire
- 20:: Connected Holder
- 23:: Battery Holder
- 23':: Second Battery Holder
- 23A:: Mounting Surface
- 23B:: Protrusion
- 23B':: Fixing Rib
- 23C:: Mounting Portion
- 23D:: Cylindrical Protrusion
- 23E:: Connecting Protrusion
- 23F:: Connecting Recess
- 23G:: Arrangement Space
- 30:: Screw
- 40:: Solder

Now that the invention has been described, what is claimed is:

## Claims

1. A battery pack comprising at least one battery cell (10) provided with an electrode on an end surface,
at least one lead plate (11) connected to an end surface electrode of a battery cell (10),
a printed circuit board (12) connected to the lead plate (11) by soldering, and
a battery holder (23) holding the lead plate (11) and a battery cell (10),
the battery pack **characterized by**:
the printed circuit board (12) having a PCB hole (13) formed in a position to solder the lead plate (11), the circumferential edge of the PCB hole (13) having a conductive pattern (15) formed to render conductive the lead plate (11); and
the battery holder (23) having a positioning mechanism holding a lead plate (11) in a position corresponding to the PCB hole (13), and
a fixing mechanism arranging the printed circuit board (12) on the lead plate (11) positioned on the battery holder (23) by the positioning mechanism in a state making contact with the conductive pattern (15), and fixing the lead plate (11) to the battery holder (23) in this state;
wherein the printed circuit board (12) is fixed to the battery holder (23) by the fixing mechanism in a state having pressure applied to the printed circuit board (12) by the lead plate (11), and the lead plate (11) is soldered to the printed circuit board (12) via the PCB hole (13) in this state.

2. A battery pack according to claim 1,
wherein the lead plate (11) has a bent lead end surface (11A) to solder the printed circuit board (12), and
wherein the area of the opening in the PCB hole (13) is substantially equal to or smaller than the area of the lead end surface (11A).

3. A battery pack according to claim 1 or claim 2,
wherein, as the positioning mechanism, a lead hole (11B) is formed in the lead end surface (11A) to position the battery holder (23), and
a protrusion (23B) is provided in the battery holder (23) in the position corresponding to the lead hole (11B), the lead end surface (11A) being positioned by inserting the protrusion (23B) into the lead hole (11B).

4. A battery pack according to claim 1 or claim 2,
wherein, as the positioning mechanism, a fixing rib holding the periphery of the lead end surface (11A) is provided in the battery holder (23).

5. A battery pack according to any one of claims 2 through 4,
wherein the battery holder (23) has at least one cell-housing space housing a battery cell (10), and
wherein the lead plate (11) is fixed to the end surface of the battery holder (23) and the end surface electrode of each cell (10) is connected to the lead plate (11) in a state in which the cell-housing space passes through the battery holder (23) and a battery cell (10) is housed in the cell-housing space.

6. A battery pack according to claim 5,
wherein a plurality of battery holders (23) are connectably configured, the plurality of battery holders (23) being connected to form a single connected holder (20).

7. A battery pack according to claim 6,
wherein a surface of connected battery holders (23) is an end surface having a fixed lead plate (11),
wherein another surface of the connected holder (20) has a mounting surface (23A) with a flat surface on which the printed circuit board (12) can be mounted, and
wherein the lead end surface (11A) is interposed between the printed circuit board (12) and the connected holder (20) in a state having the printed circuit board (12) mounted on the mounting surface (23A) with the lead end surface (11A) protruding from the connected surface of the battery holders (23) on the mounting surface (23A).

8. A battery pack according to claim 7,
wherein the battery holder (23) is configured so a secondary cell-housing space is provided on both sides of the mounting surface (23A), and
the printed circuit board (12) is arranged between secondary cell-housing spaces.

9. A battery pack according to any one of claims 6 through 8,
wherein, as the fixing mechanism, a plurality of fixing holes (14) is formed in the printed circuit board (12) to position the printed circuit board relative to a battery holder (23), and at least one cylindrical protrusion (23D) is provided in each battery holder (23) in a position corresponding to a fixing hole (14), and
wherein at least one fixing hole (14) is a long hole extending in the connecting direction of the battery holders (23), a cylindrical protrusion (23D) being inserted into the fixing hole (14) to be able to adjust the position of and fix the printed circuit board (12) to connected battery holders (23), and to adjust the position in the connecting direction of the battery holders (23) so the lead end plate (11A) is exposed via the PCB hole (13).

10. A battery pack according to any one of claims 6 through 9,
wherein the PCB hole (13) is a long hole extending in the connecting direction of the battery holders (23).

11. A battery pack according to any one of claims 1 through 10,
wherein a connector (16) is formed in the printed circuit board (12) for an electronic circuit separated from the conductive pattern (15) formed on the peripheral edge of the PCB hole (13), an electronic circuit mounted on the printed circuit board (12) being electrically connectable by soldering the conductive pattern (15) and the connector (16).
